# EUROPÄISCHE PATENTSCHRIFT

(11) **EP 2 197 615 B1**
(45) Veröffentlichungstag und Bekanntmachung des Hinweises auf die Patenterteilung: **27.04.2011**
(21) Anmeldenummer: 08785789.2
(22) Anmeldetag: 02.09.2008
(51) Int. Cl.: B23D 77/04, B23C 5/10

(54) **REIBAHLE**
REAMER
ALÉSOIR

(30) Priorität: 04.09.2007 DE 102007041935; 02.10.2007 DE 102007048634
(43) Veröffentlichungstag der Anmeldung: 23.06.2010
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2008/007144
(87) Internationale Veröffentlichungsnummer: WO 2009/030454

(56) Entgegenhaltungen:
- DE-A1- 4 343 404
- GB-A- 2 381 767
- US-A- 3 591 305
- US-A- 4 850 757
- US-A- 5 217 330

## Beschreibung

Die Erfindung betrifft eine Reibahle gemäß Oberbegriff des Anspruchs 1 und wie aus WO 2005/102574 bekannt ist.

Reibahlen der hier angesprochenen Art sind bekannt. Sie weisen einen Grundkörper, mindestens eine im Wesentlichen parallel zu einer Stirnfläche der Reibahle angeordnete Messerplatte sowie eine Justiereinrichtung auf. Die mindestens eine Messerplatte weist eine Haupt- und eine sich daran anschließende Nebenschneide auf. In der Regel ist die Hauptschneide in Vorschubrichtung des Werkzeugs geneigt, die Nebenschneide in entgegengesetzter Richtung, Entscheidend für gute Oberflächenqualitäten der bearbeiteten Bohrung ist, dass sich im Bereich der Nebenschneide ein als Verjüngung bezeichneter Abfall von 1 µ bis 3 µ, vorzugsweise von 1 µ auf 1 mm ergibt und dass dieser auch beim Justieren des Durchmessers der Reibahle erhalten bleibt. Es hat sich herausgestellt, dass sich die Verjüngung der Nebenschneide beim Einstellen des Durchmessers der Reibahle häufig verändert und nachjustiert werden muss, weil sonst hohe Obeflächenqualitäten der bearbeiteten Bohrung nicht gewährleistet werden können.

Aus der WO 2005/102574 A1 geht ein Werkzeug zur spanenden Bearbeitung von Bohrungsoberflächen hervor, welches eine Messerplatte mit geometrisch definierte Haupt- und Nebenschneide aufweist. Die Messerplatte ist von einer Bohrung durchdrungen, welche zur Aufnahme einer Spannschraube dient, mittels der die Messerplatte in einer an einem Grundkörper des Werkzeugs vorgesehenen, randoffenen Ausnehmung befestigbar ist. Die Bohrung weist einen Klemmbereich auf, mit welchem die Spannschraube zur Festlegung der Messerplatte am Werkzeug zusammenwirkt. Des Weiteren ist eine Justiereinrichtung zur Einstellung des radialen Überstands der Messerplatte vorgesehen, die einen Stellkeil umfasst, der mittels einer Justierschraube verlagerbar ist.

Es ist Aufgabe der Erfindung, eine Reibahle zu schaffen, bei welcher eine gleichbleibende Verjüngung der Nebenschneide beim Einstellen des Durchmessers der Reibahle beibehalten werden kann,

Zur Lösung dieser Aufgabe wird eine Reibahle mit den Merkmalen des Anspruchs 1 vorgeschlagen. Diese weist also einen Grundkörper, mindestens eine Messerplatte sowie eine Justiereinrichtung auf. Die Messerplatte weist wenigstens eine geometrisch definierte Haupt- und Nebenschneide auf. Sie wird von einer Spannschraube an einer Anlagefläche des Grundkörpers der Reibahle festgehalten, Die Messerplatte Ist von einer die Spannschraube aufnehmenden Aussparung durchdrungen, die einen Klemmbereich aufweist, über den Klemmkräfte von der Spannschraube in die Messerplatte eingeleitet werden. Die Justiereinrichtung dient dazu, die Haupt- und Nebenschneide so einzustellen, dass diese etwas über die Umfangsfläche der Reibahle hinausragen und bei Einbringung des Werkzeugs in eine zu bearbeitende Bohrung mit der Bohrungswand in Eingriff treten. Dazu weist die Justiereinrichtung eine Justierschraube auf, die in einem Angriffsbereich Justierkräfte auf eine Seitenfläche der Messerplatte derart einleitet, dass der Überstand einstellbar ist.

Die Reibahle zeichnet sich dadurch aus, dass der lotrecht zur Rückseite der Messerplatte gemessene Abstand des Klemmbereichs zur Rückseite gleich groß ist wie der lotrecht zur Rückseite der Messerplatte gemessene Abstand des Angriffsbereichs der Justierkräfte zur Rückseite der Messerplatte, und dass die Klemmkräfte und die Justierkräfte zur kippmomentfreien Justierung der Messerplatte in einem gleichen Abstand zur Rückseite der Messerplatte in einer Ebene wirken. Dadurch, dass die Abstände des Klemmbereichs der Spannschraube und die des Angriffsbereichs der Justierschraube zur Rückseite der Messerplatte gleich sind, die von dem Klemmbereich der Spannschraube auf die Messerplatte ausgeübten Kräfte und die über die Justierschraube auf die Seitenwand der Messerplatte einwirkenden Kräfte in einer Ebene liegen, die vorzugsweise parallel zur Rückseite der Messerplatte angeordnet ist. Es zeigt sich, dass bei einer derartigen Auslegung der Reibahle bei der Justierung der Messerplatte auf diese keine Kippmomente wirken und eine optimale Anlage an der Anlagefläche gewährleistet ist. Die von der Spannschraube gegen die Anlagefläche gepresste Messerplatte gleitet also mit ihrer Rückseite entlang dieser Anlagefläche, ohne zu verkippen.

Die Anlagefläche liegt im Wesentlichen parallel zur Stirnseite der Reibahle, sie ist jedoch, von der Mittelachse der Reibahle aus gesehen in Richtung zu deren Umfangsfläche so geneigt, dass sie um 1 µ pro 1 mm abfällt. Da der Schneidbereich der Messerplatte senkrecht zu ihrer Rückseite angeordnet ist, fällt auch die Nebenschneide bei einer derartigen Anordnung der Anlagefläche um 1 µ pro 1 mm ab. Bei einer Parallelverschiebung der Messerplatte gegenüber der Auflagefläche bleibt also die Verjüngung im Bereich der Nebenschneide auch beim Justieren der Reibahle exakt erhalten. Dies liegt insbesondere eben daran, dass die Justierkräfte kein Kippmoment bewirken, so dass die Rückseite der Messerplatte stets sicher an der Anlagefläche anliegt.

Vorzugsweise ist noch vorgesehen, dass die Justierschraube mit der Stirnseite der Reibahle einen -vorzugsweise spitzen Winkel einschließt.

Ein besonders bevorzugtes Ausführungsbeispiel der Reibahle zeichnet sich dadurch aus, dass der Klemmbereich in der in die Messerplatte eingebrachten Aussparung, die der Aufnahme der Spannschraube dient, als gewölbte Fläche oder als Innenkonus ausgebildet ist. Entsprechend ist ein Außenkonus an der Spannschraube vorgesehen, so dass diese die Messerplatte um die Mittelachse der Spannschraube zentriert. Damit ergibt sich ein sicherer Halt an der Anlagefläche Im Grundkörper der Reibahle. Außerdem lassen sich die Klemmkräfte in einem definierten Bereich der Aussparung auf die Messerplatte übertragen. Dies erleichtert es, die Einleitung der Justierkräfte in eine Seitenfläche der Messerplatte gerade auf diesen Klemmbereich so auszurichten, dass beim Justieren der Messerplatte keine Kippmomente in diese eingeleitet werden.

Weitere Ausgestaltungen ergeben sich aus den Unteransprüchen.

Die Erfindung wir im Folgenden anhand der Zeichnung näher erläutert. Es zeigen:
- Figur 1: eine perspektivische Vorderansicht eines Ausführungs- beispiels der Reibahle mit einer Messerplatte und drei Führungsleisten;
- Figur 2: eine perspektivische Ansicht des Grundkörpers der Reibahle gemäß Figur 1 ohne die Messerplatte und oh- ne Führungsleisten und
- Figur 3: einen schematischen Schnitt durch eine der an einer Anlagefläche einer Reibahle anliegende Messerplatte.

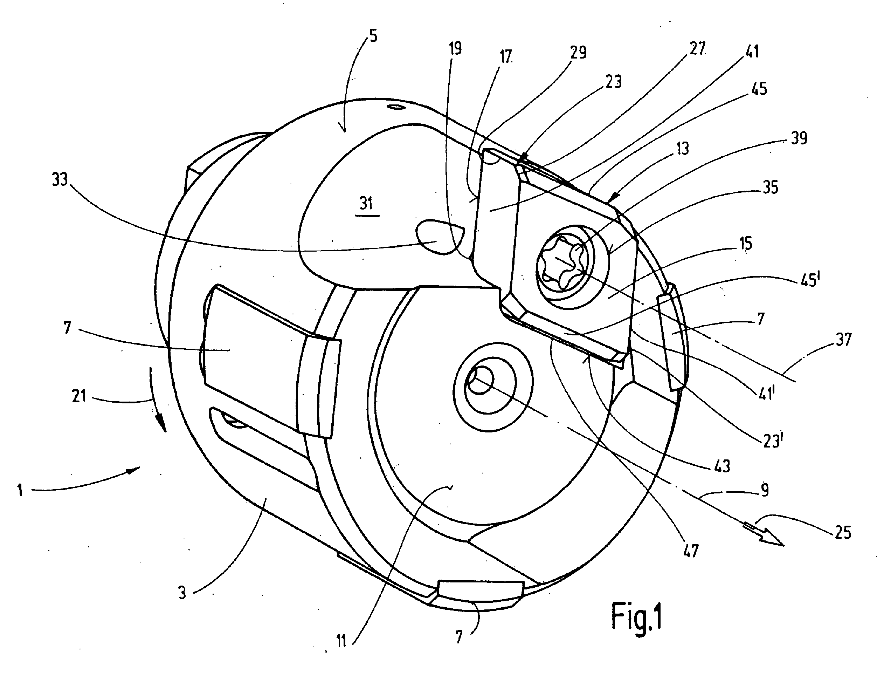

Bei dem in Figur 1 dargestellten Werkzeug zur spanenden Bearbeitung von Werkstücken handelt es sich um eine Reibahle 1 mit einem Grundkörper 3, in dessen Umfangsfläche 5 mindestens eine, hier drei Führungsleisten 7 eingesetzt sind, die im wesentlichen parallel zur Dreh- oder Mittelachse 9 der Reibahle 1 verlaufen. In die Stirnseite 11 der Reibahle 1 ist im Wesentlichen tangential mindestens eine Messerplatte eingelassen. Bei dem hier dargestellten Ausführungsbeispiel der Reibahle 1 ist eine einzeige Messerplatte 13 vorgesehen, deren Vorderseite 15 dem Betrachter zugewandt ist und deren Rückseite 17 auf einer praktisch vollständig verdeckten Anlagefläche 19 am Grundkörper 3 der Reibahle 1 anliegt. Die Reibahle 1 dient dazu, Späne von einer Bohrung abzutragen. Dazu wird in der Regel das Werkzeug in Rotation versetzt und in eine Bohrung eines stillstehenden Werkstücks eingeführt. Grundsätzlich ist es denkbar, die Reibahle 1 festzuhalten und das Werkstück in Rotation zu versetzten. Wird, wie üblich, die Reibahle 1 in Richtung des Pfeils 21 in Rotation versetzt, so werden von einem Schneidbereich 23 der Messerplatte 9, der die Umfangsfläche 5 in radialer Richtung, also senkrecht zur Mittelachse 9, überragt, Späne von einer Bohrungsoberfläche abgetragen. Bei der Bearbeitung des Werkstücks wird die Reibahle 1 dabei in Richtung des Doppelpfeils 25, also in Richtung seiner Mittelachse 9 vorgeschoben.

Aus Figur 1 ist ersichtlich, dass ein Abschnitt des Schneidbereichs 23 in Vorschubrichtung geneigt ist. Es handelt sich hier um die Hauptschneide 27 der Messerplatte 13. Beispielhaft ist hier ein Abschnitt dargestellt, der nur einen in Vorschubrichtung geneigten Bereich umfasst. Denkbar ist es aber, hier einen an die Stirnseite 11 angrenzenden ersten Bereich der Hauptschneide vorzusehen, der beispielsweise um 45° in Vorschubrichtung abfällt, und einen weiteren in Vorschubrichtung gesehen dahinterliegenden Bereich, der unter 3° bis 5° in Vorschubrichtung geneigt ist. Eine derartige Ausgestaltung bezeichnet man auch als Doppelanschnitt.

An die Hauptschneide 27, gegebenenfalls an den schwächer geneigten Bereich der Hauptschneide, schließt sich ein weiterer Abschnitt des Schneidbereichs 23 an, die Nebenschneide 29. Diese ist entgegen der durch den Doppelpfeil 25 angedeuteten Vorschubrichtung geneigt und fällt von der Hauptschneide 27 aus gesehen um 1 µ/mm bis 3 µ/mm, vorzugsweise um ein 1 µ/mm in Richtung auf die Mittelachse 9 ab. Eine derartige Ausgestaltung einer Nebenschneide ist bekannt. Sie wird auch als Verjüngung bezeichnet.

Bei der Bearbeitung eines Werkstücks werden von der Wand einer zu bearbeitenden Bohrung also zunächst Späne von der Hauptschneide 27 abgetragen. Der dabei bearbeitete Bereich wird anschließend von der Nebenschneide 29 bearbeitet. Die Verjüngung dient dazu, ein Verklemmen der Reibahle in der bearbeiteten Bohrung zu verhindern und eine optimale Oberflächengüte zu gewährleisten. Die zur Mittelachse 9 geneigte Nebenschneide 29 ist nicht zwingend über ihre ganze Länge, die von der Hauptschneide 27 bis zur Rückseite 17 der Messerplatte 13 gemessen wird, mit der Bohrungsoberfläche in Eingriff. Vorzugsweise ist vorgesehen, dass ausgehend vom Knickpunkt zwischen Haupt- und Nebenschneide ein Bereich von 3 mm der Nebenschneide 29 aktiv ist, also mit der Bohrungswand eines Werkstücks in Eingriff tritt.

Die vom Schneidbereich 23 abgetragenen Späne gelangen in eine als Spanraum 31 bezeichnete Ausnehmung im Grundkörper 3 der Reibahle 1 und können abtransportiert werden, damit die bearbeitete Bohrungsoberfläche nicht durch Späne beschädigt wird. Zur Kühlung und zum Abtransport der Späne sowie zur Schmierung des Schneidbereichs 23 kann über einen in dem Spanraum mündenden Kanal 33 ein Kühl-/Schmiermittel bereitgestellt werden.

In die Messerplatte 13 ist eine Ausnehmung 35 eingebracht, deren Längsachse senkrecht auf der Vorderseite 15 und auf der Rückseite 17 steht, außerdem auf der Anlagefläche 19. Durch die Ausnehmung 35 greift eine Spannschraube 39, mit der die Messerplatte 13 am Grundkörper 3 der Reibahle 1 befestigt und mit ihrer Rückseite 17 gegen die Anlagefläche 19 angepresst wird. Der Kopf der Spannschraube 39 liegt in der Messerplatte 13 versenkt in der Ausnehmung 35.

Es ist vorgesehen, dass die Anlagefläche 19 in radialer Richtung, also von der Mittelachse 9 aus gesehen, in Richtung auf die Umfangsfläche 5 der Reibahle 1 abfällt, nämlich vorzugsweise um 1 µ/mm. Da die Nebenschneide 29 gegenüber der Rückseite 17 der Messerplatte 13 senkrecht verläuft, dient diese Neigung der Anlagefläche 19 dazu, die Verjüngung der Nebenschneide 29, also deren Neigung gegenüber der Mittelachse 9 einzustellen. Vorzugsweise ist dabei auch die Längsachse 27 der Spannschraube 39 gegenüber der Mittelachse so geneigt, dass sie, wie oben gesagt, senkrecht auf der Anlagefläche 19 steht.

Aus der Darstellung gemäß Figur 1 ist erkennbar, dass die Messerplatte 13 -in Draufsicht gesehen- als Parallelogramm ausgebildet ist. Eine erste Seitenfläche 41 weist in die durch den Pfeil 21 angedeutete Drehrichtung. Die gegenüberliegende Seite 41' liegt an einer Begrenzungswand einer in den Grundkörper 3 der Reibahle 1 eingebrachten Ausnehmung 43 an, welche die Messerplatte 13 aufnimmt. Eine äußere Längsseite 45 der Reibahle weist nach außen. Eine gegenüberliegende innere Längsseite 45' liegt an einer Innenwand 47 der Ausnehmung 43. Auf diese innere Längsseite 45' wirkt eine hier nicht dargestellte Justiereinrichtung, die dazu dient, den Überstand des Schneidbereichs 23 über die Umfangsfläche 5 der Reibahle 1 zu justieren und damit den Durchmesser des Werkzeugs einzustellen.

Die Messerplatte 23 weist vorzugsweise zwei Schneidbereiche auf. Diametral gegenüber dem Schneidbereich 23 ist ein Schneidbereich 23' vorgesehen. Bei Verschleiß des Schneidbereichs 23 kann die Spannschraube 39 gelöst werden. Die Messerplatte 13 wird dann um 180° um die Längsachse 37 gedreht und wieder in die Ausnehmung 43 eingesetzt, sodann mit der Spannschraube 39 festgespannt.

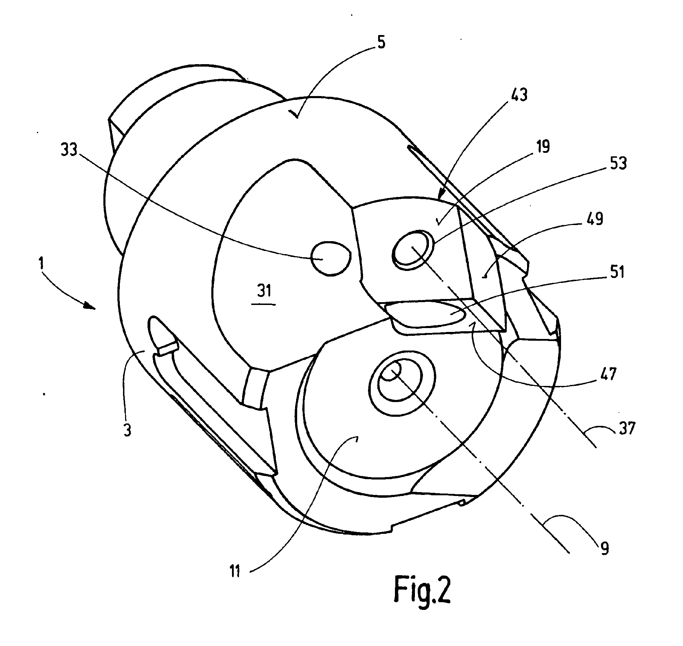

Figur 2 zeigt die Reibahle 1 wiederum in perspektivischer Ansicht, allerdings etwas weiter von oben, als dies in Figur 1 der Fall ist. Bei der Darstellung gemäß Figur 2 sind alle am Grundkörper 3 der Reibahle 1 montierten Teile weggelassen, also die mindestens eine Messerplatte und die mindestens eine Führungsleiste. Gleiche Teile sind mit gleichen Bezugsziffern versehen, sodass insofern auf die Beschreibung zu Figur 1 verwiesen wird.

In den Grundkörper 3 der Reibahle 1 ist die Ausnehmung 43 zur Aufnahme der hier nicht dargestellten Messerplatte 13 eingebracht. Deutlich erkennbar sind die Innenwand 47, eine dem Spanraum 31 gegenüberliegende Begrenzungswand 49 und die Auflagefläche 19 dieser Ausnehmung 43. Im Bereich der Innenwand 47 ist eine Öffnung 51 zu sehen, durch die eine Justiereinrichtung auf die Messerplatte 13 einwirken kann, um den Durchmesser der Reibahle 1 einstellen zu können. Die Justiereinrichtung umfasst eine hier nicht dargestellte, die Öffnung 51 durchgreifende Justierschraube, die auf die innenliegende Längsseite 45' der Messerplatte 13 wirkt. Die Justierschraube ist vorzugsweise so angeordnet, dass sie, beziehungsweise ihre Mittelachse, einen vorzugsweise spitzen Winkel mit der Stirnseite 11 der Reibahle 1 einschließt.

In der Anlagefläche 19 ist eine Bohrung 53 zu sehen, deren Mittelachse mit der Mittelachse 37 der hier nicht wiedergegebenen Spannschraube zusammenfällt. Sie steht auf der Anlagefläche 19 senkrecht.

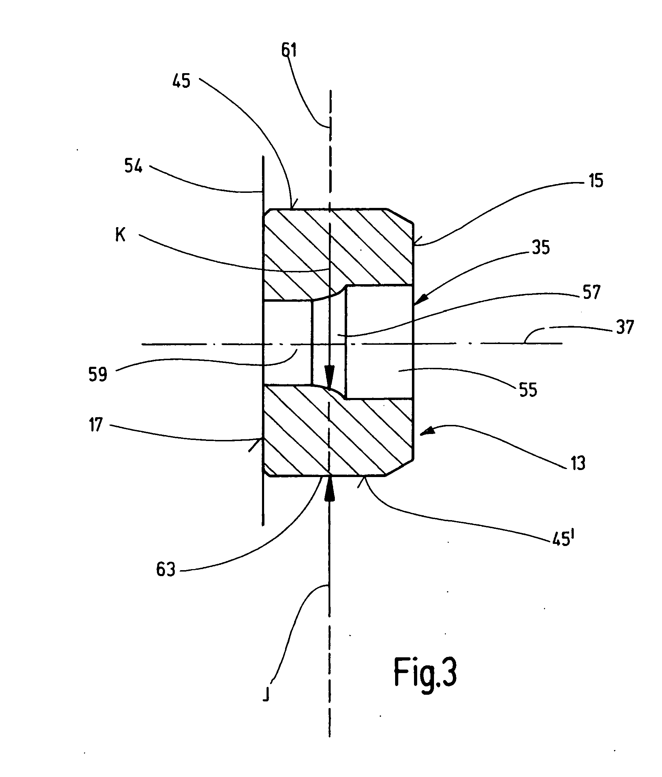

Figur 3 zeigt die Messerplatte 13 im Schnitt ohne die Reibahle 1. Allerdings ist hier eine Ebene 54 angedeutet, in der die Anlagefläche 19 der Ausnehmung 43 liegt.

In der Schnittdarstellung ist die Ausnehmung 35 in der Messerplatte 13 zu sehen. Sie weist einen ersten Bereich 55 auf, dessen Innendurchmesser so gewählt ist, dass er den Kopf einer Spannschraube 39 aufnehmen kann. Der erste Bereich 55 geht von der Vorderseite 15 der Messerplatte 13 aus. An ihn schließt sich ein Klemmbereich 57 an, der sich in einen zweiten Bereich 59 fortsetzt, durch den der Schaft der Spannschraube 39 hindurch tritt. Der erste Bereich 55 und der zweite Bereich 59 sind vorzugsweise zylindrisch ausgebildet. Zu dem Klemmbereich 57 ist Folgendes festzuhalten:

Es ist möglich, hier einen Innenkonus auszubilden, vorzugsweise geht aber der erste Bereich 55 über einen definierten Bogen in den zweiten Bereich 59 über, sodass der Klemmbereich 57 durch eine gekrümmte Fläche definiert wird, die -im Schnitt gesehen- in Richtung auf die Längsachse 37 vorgewölbt ist, also konvex ausgebildet ist. Wirkt auf diese Fläche ein Außenkonus einer Spannschraube 39 ein, so ergibt sich hier im Klemmbereich 57 eine Linienberührung, sodass die durch den Pfeil K angedeuteten Klemmkräfte in einer definierten Ebene 61 liegen und senkrecht zur Mittelachse der Ausnehmung 35 verlaufen, die mit der Längsachse 37 einer hier nicht dargestellten Spannschraube zusammenfällt.

Denkbar ist es schließlich auch, den ersten Bereich 55 über eine durch eine Flachsenkung erzeugte Stufe in den zweiten Bereich 59 übergehen zu lassen, sodass der Klemmbereich 57 durch diese Stufe gebildet wird, auf der ein Fachkopf einer Spannschraube aufliegen kann. Die Fläche auf welcher der Flachkopf anliegt, ist in einer Ebene angeordnet, die parallel zur Ebene 54 verläuft. Auch in diesem Fall ergibt sich eine definierte Ebene, in der die Klemmkräfte K wirken.

Auf die untere Längsseite 45', welche der oberen Längsseite 45 gegenüberliegt, wirken durch einen Pfeil J angedeutete Justierkräfte ein. Aus der Darstellung gemäß Figur 3 wird deutlich, dass die Justierkräfte in einem Angriffsbereich 63 auf die Messerplatte 13 wirken, der in der Ebene 61 liegt. Gemessen von der Ebene 54 wirken also die durch den Pfeil K angedeuteten Klemmkräfte und die durch den Pfeil J angedeuteten Justierkräfte in einem gleichen Abstand. Sie liegen in ein und derselben Ebene 61, sodass durch die Klemm- und Justierkräfte kein Kippmoment auf die Messerplatte 13 ausgeübt wird. Diese liegt daher mit ihrer Rückseite 17 auch bei Einwirkung von Justierkräften flächig an der hier nicht dargestellten, in der Ebene 55 liegenden Anlagefläche 19, sodass die gewählte Verjüngung der Messerplatte 13 sicher erhalten bleibt und eine hohe Oberflächengüte bei der Bearbeitung einer Bohrungsoberfläche gewährleistet ist.

Insgesamt wird deutlich, dass die Messerplatte 13 sicher und insbesondere sehr exakt im Grundkörper 3 der Reibahle 1 gelagert ist. Sie wird durch die Begrenzungswand 49 und durch die Innenwand 47 der Ausnehmung 43 verdrehsicher im Grundkörper 3 der Reibahle 1 gehalten und durch die Anlagefläche 19 in einer definierten Winkelposition ausgerichtet. Da die Anlagefläche 19 von der Mittelachse 9 der Reibahle 1 in Richtung auf die Umfangsfläche 5 abfällt, und zwar unter 1 µ/mm bis 3 µ/mm, vorzugsweise unter definiert unter 1 µ pro 1 mm, kann der Neigungswinkel der Nebenschneide 29, also die Verjüngung des Schneidbereichs 23 exakt eingestellt und auch bei einer Justierung der Messerplatte 13 beibehalten werden.

Es hat sich gezeigt, dass die hier gewählte Ausgestaltung besonders für die exakte Feinbearbeitung von Bohrungsoberflächen mittels der Reibahle 1 besonders vorteilhaft ist.

## Patentansprüche

1. Reibahle mit
- einem Grundkörper (3),
- mindestens einer im Wesentlichen parallel zu einer Stirnseite (11) der Reibahle (1) angeordneten Messerplatte (13), die
- eine geometrisch definierte Haupt- (27) und eine geometrisch definierte Nebenschneide (29) aufweiset und
- von einer die Messerplatte (13) durchdringenden Spannschraube (39) an einer Auflagefläche (19) des Grundkörpers (3) der Reibahle (1) gehalten wird, wobei eine Rückseite (17) der Messerplatte (13) an der Auflagefläche (19) anliegt, und wobei die Messerplatte (13) von einer die Spannschraube (39) aufnehmenden Aussparung (35) durchdrungen ist, die einen Klemmbereich (57) aufweist,
- mit einer Justiereinrichtung mit
- einer auf die Messerplatte (13) wirkenden Justierschraube, die in einem Angriffsbereich Justierkräfte in eine Seitenfläche der Messerplatte (13) einleitet,
**dadurch gekennzeichnet, dass**
- der lotrecht zur Rückseite (17) der Messerplatte (13) gemessene Abstand des Klemmbereichs (57) zur Rückseite (17) gleich groß ist wie der lotrecht zur Rückseite (17) der Messerplatte (13) gemessene Abstand des Angriffsbereichs der Justierkräfte zur Rückseite (17) der Messerplatte (13), und dass
- die Klemmkräfte und die Justierkräfte zur kippmomentfreien Justierung der Messerplatte (13) in einem gleichen Abstand zur Rückseite (17) der Messerplatte (13) in einer Ebene (61) wirken.

2. Reibahle nach Anspruch 1, **dadurch gekennzeichnet, dass** der Klemmbereich (57) in der die Spannschraube (39) aufnehmenden Ausnehmung (35) als gewölbte Fläche oder als Innenkonus ausgebildet ist, der mit einem Außenkonus an der Spannschraube (39) zusammenwirkt.

3. Reibahle nach Anspruch 2, **dadurch gekennzeichnet, dass** der Außenkonus vorzugsweise am Kopf der Spannschraube (39) vorgesehen ist.

4. Reibahle nach einem der vorhergehenden Ansprüche, **dadurch gekennzeichnet, dass** die Messerplatte (13) -in Draufsicht gesehen- als Vieleck ausgebildet ist.

5. Reibahle nach Anspruch 4, **dadurch gekennzeichnet, dass** die Messerplatte (13) -in Draufsicht gesehen- als Parallelogramm ausgebildet ist.

6. Reibahle nach einem der vorhergehenden Ansprüche, **dadurch gekennzeichnet, dass** die Justierschraube mit der Stirnseite (11) der Reibahle (1) einen -vorzugsweise spitzen- Winkel einschließt.

7. Reibahle nach einem der vorhergehenden Ansprüche, **dadurch gekennzeichnet, dass** mindestens eine Führungsleiste (7) vorgesehen ist, die in die Umfangsfläche (5) der Reibahle (1) einsetzbar ist.

8. Reibahle nach Anspruch 7, **dadurch gekennzeichnet, dass** eine Messerplatte (13) und drei Führungsleisten (7) vorgesehen sind, von denen die erste Führungsleiste der Haupt- und Nebenschneide der Messerplatte (13) um 75° nacheilt, die zweite Führungsleiste der Haupt- und Nebenschneide diametral gegenüberliegt und die dritte Führungsleiste der Haupt- und Nebenschneide der Messerplatte um 270° nacheilt.

9. Reibahle nach einem der vorhergehenden Ansprüche, **dadurch gekennzeichnet, dass** die Messerplatte (13) zwei diagonal gegenüberliegende Schneidbereiche (23;23') mit je einer Haupt- und einer Nebenschneide aufweist.

10. Reibahle nach einem der vorhergehenden Ansprüche, **dadurch gekennzeichnet, dass** die Anlagefläche (19) -von einer Mittelachse (9) der Reibahle (1) aus gesehen- um 1 µ/mm von innen nach außen abfällt, sodass die Nebenschneide (29) der mindestens einen Messerplatte um 1 µ/mm bis 3 µ/mm, vorzugsweise um 1 µ/mm abfällt.

## Claims

1. A reamer having
- a base (3),
- at least one cutting tip (13) disposed essentially parallel to a face (11) of the reamer (1) that comprises
- one geometrically defined major cutting edge (27) and one geometrically defined minor cutting edge (29) and
- is held on a contact surface (19) of the base (3) of the reamer (1) by a tightening screw (39) penetrating the cutting tip (13), with a back (17) of the cutting tip (13) resting against the contact surface (19), and with the cutting tip (13) being penetrated by a recess (35) accommodating the tightening screw (39), the recess comprising a clamping region (57),
- having an adjustment unit having
- an adjustment screw acting on the cutting tip (13) that introduces adjustment forces into a lateral surface of the cutting tip (13) in an engagement region,
**characterized in that**
- the distance of the clamping region (57) to the rear (17) of the cutting tip (13) measured perpendicular to the rear (17) is equal to the distance from the engagement region of the adjustment forces to the rear (17) of the cutting tip (13) measured perpendicular to the rear (17) of the cutting tip (13), and that
- the clamping forces and the adjustment forces acting in a plane (61) for adjusting the cutting tip (13) without tilting moment in a same distance to the back (17) of the cutting tip (13).

2. The reamer according to Claim 1, **characterized in that** the clamping region (57) in the recess (35) accommodating the tightening screw (39) is designed as an arced surface or an inner cone, which cooperates with an outer cone on the tightening screw (39).

3. The reamer according to Claim 2, **characterized in that** the outer cone is preferably provided on the head of the tightening screw (39).

4. The reamer according to one of the previous Claims, **characterized in that** the cutting tip (13) is designed as a polygon when viewed from the top.

5. The reamer according to Claim 4, **characterized in that** the cutting tip (13) is designed as a parallelogram when viewed from the top.

6. The reamer according to one of the previous Claims, **characterized in that** the adjustment screw forms an angle, preferably an acute angle, with the face (11) of the reamer (1).

7. The reamer according to one of the previous Claims, **characterized in that** at least one guide strip (7) is provided that may be placed in the circumferential surface (5) of the reamer (1).

8. The reamer according to Claim 7, **characterized in that** one cutting tip (13) and three guide strips (7) are provided, of which the first guide strip lags behind the major and minor cutting edges of the cutting tip (13) by 75°, the second guide strip is located diametrically opposite the major and minor cutting edges, and the third guide strip lags behind the major and minor cutting edges of the cutting tip by 270°.

9. The reamer according to one of the previous Claims, **characterized in that** the cutting tip (13) comprises two cutting regions (23; 23') located one diagonally opposite the other, each having one major and one minor cutting edge.

10. The reamer according to one of the previous Claims, **characterized in that** the contact surface (19), viewed from a central axis (9) of the reamer (1), declines from the inside toward the outside by 1 µ/mm such that the minor cutting edge (29) of the at least one cutting tip declines by 1 µ/mm to 3 µ/mm, preferably 1 µ/mm.

## Revendications

1. Alésoir comprenant
- un corps de base (3),
- au moins une plaquette de coupe (13) disposée essentiellement parallèlement à un côté frontal (11) de l'alésoir (1), qui
- présente une lame principale (27) définie géométriquement et une lame secondaire (29) définie géométriquement et
- est maintenue par une vis de serrage (39) traversant la plaquette de coupe (13) sur une surface d'appui (19) du corps de base (3) de l'alésoir (1), dans lequel un côté arrière (17) de la plaquette de coupe (13) repose sur la surface d'appui (19) et dans lequel la plaquette de coupe (13) est traversée par un évidement (35) recevant la vis de serrage (39), qui présente une zone de serrage (57),
- comprenant un dispositif de réglage avec
- une vis de réglage agissant sur la plaquette de coupe (13) qui introduit des forces de réglage dans une surface latérale de la plaquette de coupe (13) dans une zone d'attaque,
**caractérisé en ce que**
- l'écart entre la zone de serrage (57) et le côté arrière (17), mesuré verticalement par rapport au côté arrière (17) de la plaquette de coupe (13), est égal à l'écart entre la zone d'attaque des forces de réglage et le côté arrière (17) de la plaquette de coupe (13), mesuré verticalement par rapport au côté arrière (17) de la plaquette de coupe (13), et que
- les forces de serrage et les forces de réglage agissent dans un plan (61) à un écart égal par rapport au côté arrière (17) de la plaquette de coupe (13) pour le réglage exempt de couple de renversement de la plaquette de coupe (13).

2. Alésoir selon la revendication 1, **caractérisé en ce que** la zone de serrage (57) est réalisée en tant que surface bombée ou en tant que cône interne, qui coopère avec un cône externe sur la vis de serrage (39), dans l'évidement (35) recevant la vis de serrage (39).

3. Alésoir selon la revendication 2, **caractérisé en ce que** le cône externe est de préférence prévu à la tête de la vis de serrage (39).

4. Alésoir selon l'une quelconque des revendications précédentes, **caractérisé en ce que** la plaquette de coupe (13) est réalisée en tant que polygone vu en vue de dessus.

5. Alésoir selon la revendication 4, **caractérisé en ce que** la plaquette de coupe (13) est réalisée en tant que parallélogramme vu en vue de dessus.

6. Alésoir selon l'une quelconque des revendications précédentes, **caractérisé en ce que** la vis de réglage inclut un angle de préférence aigu avec le côté frontal (11) de l'alésoir (1).

7. Alésoir selon l'une quelconque des revendications précédentes, **caractérisé en ce qu'**au moins une barre de guidage (7) qui peut être insérée dans la surface périphérique (5) de l'alésoir (1) est prévue.

8. Alésoir selon la revendication 7, **caractérisé en ce qu'**une plaquette de coupe (13) et trois barres de guidage (7) sont prévues, parmi lesquelles la première barre de guidage est en retard de 75° sur la lame principale et secondaire de la plaquette de coupe (13), la deuxième barre de guidage est diamétralement opposée à la lame principale et secondaire et la troisième barre de guidage est en retard de 270° sur la lame principale et secondaire du bloc d'appui.

9. Alésoir selon l'une quelconque des revendications précédentes, **caractérisé en ce que** la plaquette de coupe (13) présente deux zones de coupe (23 ; 23') diagonalement opposées avec chacune une lame principale et une lame secondaire.

10. Alésoir selon l'une quelconque des revendications précédentes, **caractérisé en ce que** la surface d'appui (19) est baissée de 1 µ/mm de l'intérieur vers l'extérieur, vu depuis un axe moyen (9) de l'alésoir (1), de sorte que la lame secondaire (29) de l'au moins une plaquette de coupe est baissée de 1 µ/mm à 3 µ/mm, de préférence de 1 µ/mm.
